# EUROPEAN PATENT APPLICATION

(11) **EP 1 478 138 A2**
(43) Date of publication of application: **17.11.2004**
(21) Application number: 04011406.8
(22) Date of filing: 13.05.2004
(51) Int. Cl.: H04L 12/56, H04L 29/06, H04H 1/00

(54) **Security method for broadcasting service in a mobile communication system**

(30) Priority: 13.05.2003 KR 2003030374; 08.09.2003 KR 2003062703
(71) Applicant: Samsung Electronics Co., Ltd., Suwon-si, Gyeonggi-do (KR)
(72) Inventor: Bae, Beom-Sik, Samsung Electronics Co., Ltd., Suwon-si, Gyeonggi-do (KR); Song, Jun-Hyuk, Samsung Electronics Co., Ltd., Suwon-si, Gyeonggi-do (KR); Kim, Dae-Gyun, Samsung Electronics Co., Ltd., Suwon-si, Gyeonggi-do (KR); Jung, Jung-Soo, Samsung Electronics Co., Ltd., Suwon-si, Gyeonggi-do (KR); Lim, Nae-Hyun, Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a method for receiving an encrypted broadcasting service by an access terminal in a mobile communication system including an access node for providing a broadcasting service to the access terminal over a radio channel and a packet data service node for connecting the access node to a broadcasting server via a packet data network. The method comprises receiving a mask parameter message including a mask value for reception of a desired broadcasting service, from the access node; receiving a broadcasting service packet including a masked seed and a broadcast security packet, from the access node over a radio broadcast channel; calculating a particular seed using the masked seed value and the mask value, and generating an encryption key using the calculated seed and a previously received broadcast access key; and decrypting the broadcast security packet using the encryption key.

## Description

### BACKGROUND OF THE INVENTION

### 1. Field of the Invention

The present invention relates generally to a method for providing a broadcasting service in a mobile communication system, and in particular, to a security method for a broadcasting service provided to an access terminal (AT).

### 2. Description of the Related Art

The future communication environments are being developed so as to be without distinction between wire/wireless area and between of region and country. In particular, such future communication environment, for example, IMT-2000 (International Mobile Telecommunication-2000), tends to collectively provide various information desired by a user, as well as video and sound information on a real-time basis. With the development of mobile communication technology, the existing mobile communication systems enabling users to simply perform voice communication using an access terminal (AT), such as a cellular phone or a personal communications system (PCS) phone, have evolved into an advanced mobile communication system capable of enabling users not only to transmit text information but also to view or receive a broadcasting service.

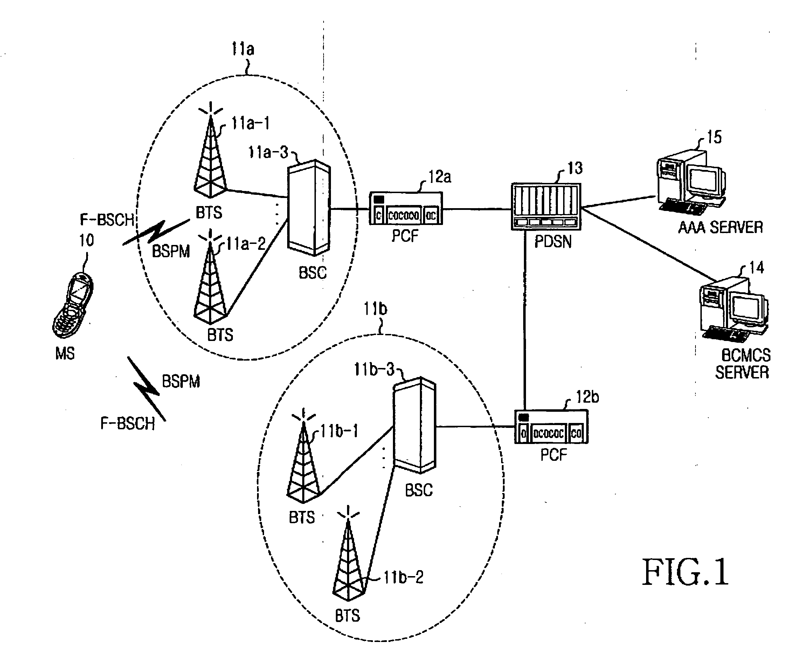

FIG. 1 is a diagram illustrating a configuration of an entire system for providing a broadcasting service in a mobile communication system. Referring to FIG 1, a broadcast/multicast service (BCMCS) server or a contents server (CS) 14 is a server for providing BCMCS traffic data including video and/or sound for a broadcasting service. The BCMCS server 14 transmits BCMCS traffic data to access nodes (ANs) 11a and 11b via a packet data service node (PDSN) 13 and packet control function blocks (PCFs) 12a and 12b. When the BCMCS server 14 is connected to the packet data service node 13 via a packet communication network such as the Internet, the BCMCS traffic data is generated in the form of Internet protocol (IP) data.

The packet data service node 13 receives user profile information for authentication on packet communication, from an authentication, authorization and accounting (AAA) server 15, generates accounting information for a broadcasting service, and provides the generated accounting information to the AAA server 15. The access nodes 11a and 11b include base transceiver subsystems (BTSs) 11a-1, 11a-2, 11b-1 and 11b-2 for controlling operations of a link layer and a physical layer, and base station controllers (BSCs) 11a-3 and 11b-3 for controlling an operation of a network layer. The access nodes 11a and 11b access the packet data service node 13 via the packet control function blocks (PCFs) 12a and 12b that perform interfacing for packet data communication.

An exemplary method for transmitting broadcast data will be described below. An IP multicast scheme is used in order to transmit broadcast data generated by the BCMCS server 14. The access nodes 11a and 11b, receiving the BCMCS traffic data transmitted by the IP multicast scheme, constitute a multicast group that receives IP multicast data from the BCMCS server 14. Membership information of the multicast group is maintained by multicast routers (MRs) (not shown) connected to the access nodes 11a a and 11b.

Though not illustrated in FIG 1, the broadcasting service system for a mobile communication system can further include a BCMCS controller which takes full charge of authentication on packet communication and generation of accounting information for a broadcasting service, instead of the packet data service node 13.

In such a radio communication system as described above, security for a broadcasting service is most important in providing a commercial broadcasting service. Because the broadcasting service is broadcasted to all users, even unauthorized users can view the broadcasting service free of charge, if security is not provided to prevent reception of the broadcasting service. In order to correctly support accounting on a broadcasting service viewed by users, powerful security is required for the broadcasting service within a permitted time period. To this end, the broadcasting service system for a mobile communication system uses broadcast security packets through link layer encryption.

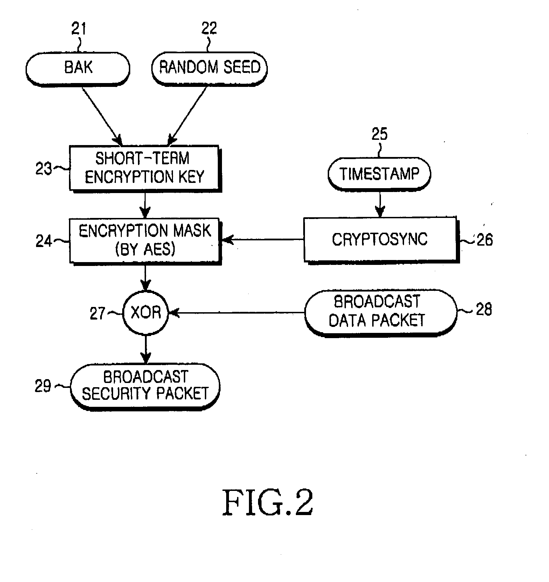

FIG. 2 is a block diagram illustrating an operation of generating broadcast security packets to which link layer encryption is applied. Referring to FIG 2, a link layer of an access node receives a broadcast access key (BAK) 21 for encryption/decryption of broadcast data from a BCMCS 14 controller or a packet data service node, and generates a seed. The "seed" refers to a bit sequence shared by a transmitter and a receiver of encrypted data, for communication security. Here, the seed is called "random seed (RS)" 22, it is randomly generated within a predetermined bit size. The access node generates a short-term encryption key (SK) 23 using the random seed 22 and the broadcast access key 21.

Further, the access node generates crypto-synchronization information (Cryptosync) 26 using a timestamp value 25 for a BCMCS traffic transmission time at the time where it desires to generate the broadcast security packet. In addition, the access node generates an encryption mask 24 by performing an advanced encryption standard (AES) Rijndael algorithm using the short-term encryption key 23 and the crypto-synchronization information 26. The access node generates a broadcast security packet 29 by performing an exclusive OR (XOR) operation 27 on the encryption mask 24 and a broadcast data packet 28 on a bitwise basis.

An access terminal generates the same encryption mask as that used in the access node and decrypts a broadcast security packet received from the access node with the generated encryption mask, thereby acquiring a broadcast data packet. In order to generate the encryption mask, the access terminal requires the BAK 21, tho random seed and the timestamp value used in the access node. The timestamp value is transmitted from the access node through an overhead message at or immediately before the time where a corresponding broadcast security packet becomes valid. The BAK 21 is acquired in an initialization process where the access terminal accesses a BCMCS 14 controller and receives broadcast session information for a broadcasting service in order to view the broadcasting service. The random seed 22 is transmitted from the access node to the access terminal along with a security parameter message during transmission of BCMCS traffic.

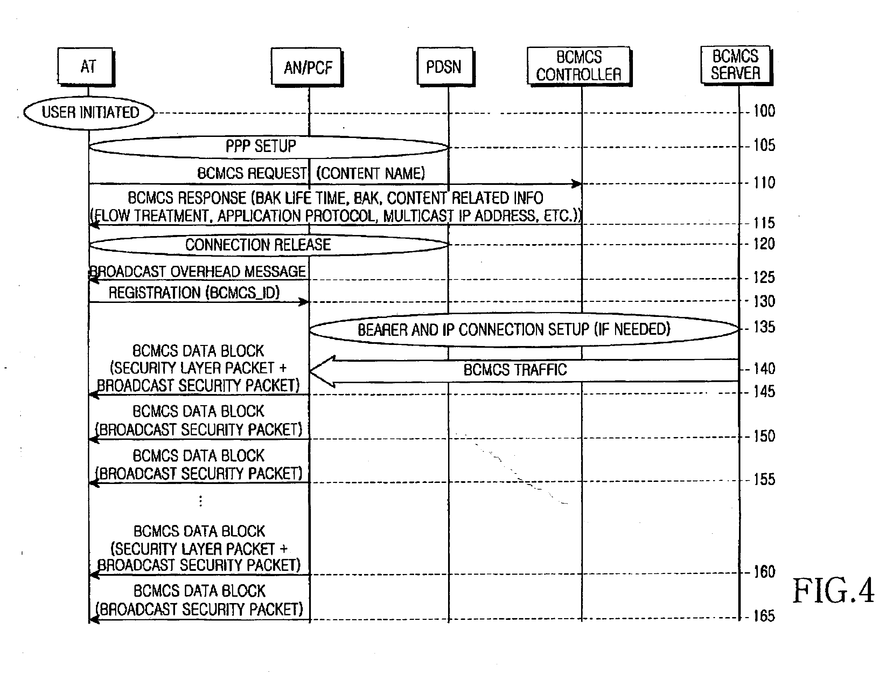

FIG 4 is a message flow diagram illustrating a signaling procedure for a broadcasting service in a mobile communication system. In FIG 4, an access node (AN) and a packet control function block (PCF) are expressed as AN/PCF, for the convenience of explanation. Referring to FIG 4, if a user requests initiation of a broadcasting service in step 100 by manipulating a menu screen or pushing a predetermined shortcut key, an access terminal (AT) sets up point-to-point protocol (PPP) connection to a packet data service node PDSN for packet data communication in step 105. Though not illustrated in FIG 4, the access terminal can receive information on broadcasting services that can be provided by a network before step 100.

In step 110, the packet data service node forwards to a BCMCS controller a BCMCS Request message containing a content name indicating information on a broadcasting service that the user desires to view. In step 115, the BCMCS controller transmits security information BAK and BAK lifetime, that is necessary for receiving broadcast data together with requested broadcasting service-related information, e.g., protocol stack, multicast IP address and broadcast identifier, in response to the broadcasting service request If the information related to the desired broadcasting service is completely acquired through such processes, the access terminal releases a radio channel and PPP connection in step 120.

In step 125, the access terminal receives a broadcast overhead message transmitted over a control channel. The broadcast overhead message includes information on a physical channel for receiving broadcast data, as well as sector information related to an access node or a sector, in case of a sector-type access node, serving the access node and information on its neighbor cell. In step 130, the access terminal transmits a registration message including an identifier, e.g., BCMCS Flow ID or logical channel ID, of a broadcasting service desired by the user to the access node. The registration message is commonly used for location registration in a cellular system used herein for requesting a broadcasting service.

In step 135, the access node determines whether the requested broadcasting service is identical to the ongoing broadcasting service. If it is determined that the requested broadcasting service is not identical to the ongoing broadcasting service or accounting is needed, the access node sets up a bearer path to the packet data service node and performs an IP connection procedure to the BCMCS server. By using the connected bearer path, the access node can transmit broadcasting service data and accounting information. Thereafter, in step 140, BCMCS traffic from the BCMCS server arrives at the access node.

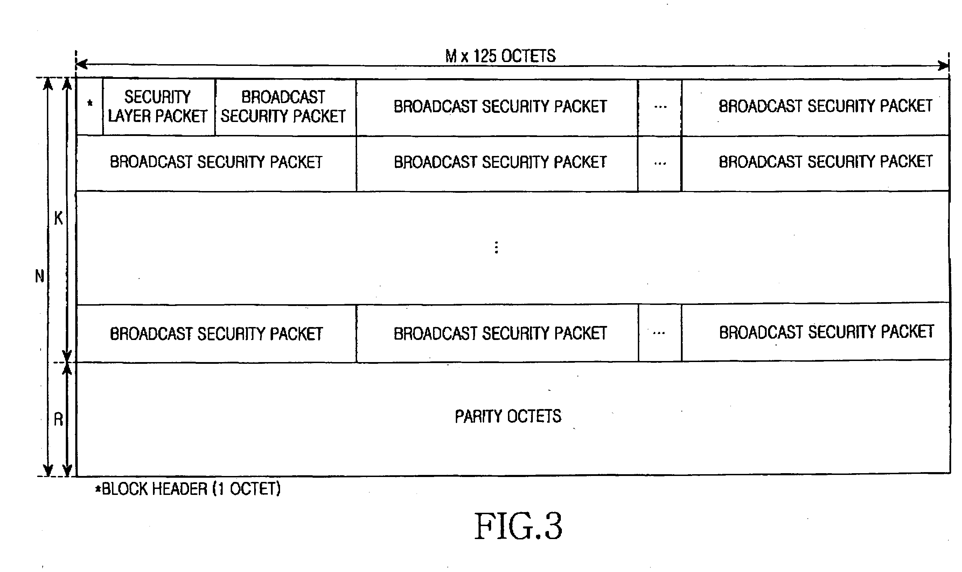

In step 145, the access node starts transmitting BCMCS packets received over a channel for transmitting the BCMCS traffic. In this case, the access node transmits a security layer packet including a security parameter message, carried by a first BCMCS packet, and if there is enough room, the access node adds a broadcast security packet. The security layer packet, as mentioned above, includes a random seed necessary for decryption of broadcast security packets. A format which is used to transmit the security layer packet and BCMCS packets secured with the security layer packet is shown in FIG. 3. FIG. 3 is a diagram illustrating the format of the secured BCMCS packets. The format includes a plurality of broadcast security packets preceded by a block header and a security layer packet.

Returning to FIG 4, in steps 150 to 155, the access node continuously transmits BCMCS packets including broadcast security packets. When the random seed is changed, the access node transmits again a new random seed carried by a BCMCS packet in step 160, and continuously transmits consecutive broadcast security packets in step 165.

In such a conventional broadcast security method, because a random seed, information necessary for decryption of broadcast security packets, is transmitted as an inband signal, all access terminals monitoring a broadcast channel can detect the random seed. Therefore, in order to limit accessibility to a broadcast channel by an access terminal, it is necessary to secure stability of BAK that is transmitted as an cut-band signal. The casiest way to minimize unauthorized reception of a broadcasting service even if BAK is stolen, e.g., fraudulently used or hacked, is to frequently change the BAK.

However, because the user must access the BCMCS server to acquire the BAK, it is very cumbersome to frequently change the BAK. Actually, the BAK is designed such that its lifetime has a minimum of one week and a maximum of one or more months. Therefore, even an access terminal that has fraudulently acquired BAK, i.e., even an access terminal unauthorized to receive a broadcasting service can view the broadcasting service.

Further, in the broadcasting system described above, the information that can be used for accounting on a broadcasting service includes only BAK, but the BAK has a relatively long lifetime as stated above. Disadvantageously, therefore, accounting should be performed according to the lifetime of the BAK regardless of the time for which the access terminal has actually used the broadcasting service.

### SUMMARY OF THE INVENTION

It is, therefore, an object of the present invention to provide a method for improving security of BCMCS traffic by using a security parameter that can be changed in a mobile communication system in relatively short time periods..

It is another object of the present invention to provide a method for transmitting a security parameter necessary for a broadcasting service only to a user authorized by authentication in a mobile communication system.

To achieve the above and other objects, there is provided a method for receiving an encrypted broadcasting service by an access terminal in a mobile communication system including an access node for providing a broadcasting service to the access terminal over a radio channel and a packet data service node for connecting the access node to a broadcasting server via a packet data network. The method comprises receiving a mask parameter message including a mask value for reception of a desired broadcasting service, from the access node; receiving a broadcasting service packet including a masked seed and a broadcast security packet, from the access node over a radio broadcast channel; calculating a particular seed using the masked seed value and the mask value, and generating an encryption key using the calculated seed and a previously received broadcast access key; and decrypting the broadcast security packet using the encryption key.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a configuration of a system for providing a broadcasting service in a mobile communication system;
FIG 2 is a flow diagram illustrating an operation of generating broadcast security packets to which link layer encryption is applied;
FIG. 3 is a diagram illustrating a format of the secured BCMCS packets;
FIG. 4 is a message flow diagram illustrating a signaling procedure for a broadcasting service in a mobile communication system;
FIG 5 is a flow diagram illustrating an operation of generating broadcast security packets to which link layer encryption is applied according to an embodiment of the present invention;
FIG 6 is a diagram illustrating an example of a format of an X mask parameter message according to an embodiment of the present invention;
FIG. 7 is a diagram illustrating another example of a format of an X mask parameter message according to an embodiment of the present invention;
FIG 8 is a diagram illustrating another example of a format of an X mask parameter message according to an embodiment of the present invention;
FIG 9 is a diagram illustrating still another example of a format of an X mask parameter message according to an embodiment of the present invention;
FIG. 10 is a message flow diagram illustrating a signaling procedure for a broadcasting service according to an embodiment of the present invention;
FIG 11 is a diagram illustrating a format of a security parameter message according to an embodiment of the present invention;
FIG 12 is a diagram illustrating a format of a security parameter message according to another embodiment of the present invention;
FIG. 13 is a diagram illustrating a format of a broadcast overhead message capable of designating use/non-use of an X mask value according to an embodiment of the present invention;
FIG 14 is a diagram illustrating a format of a logical channel registration message for requesting an X mask according to an embodiment of the present invention; and
FIG 15 is a flow diagram illustrating a procedure for notifying an X mask value to an access terminal according to an embodiment of the present invention.

### DETAILED DESCRIPTION OF THE PREFERRED EMBODIMENT

Several preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

The present invention provides a method for encrypting BCMCS traffic, for security, using a security parameter that can be changed at periods of a relatively short time. In particular, the present invention provides a method for transmitting the security parameter only to a user authorized by authentication, using an out-band signal.

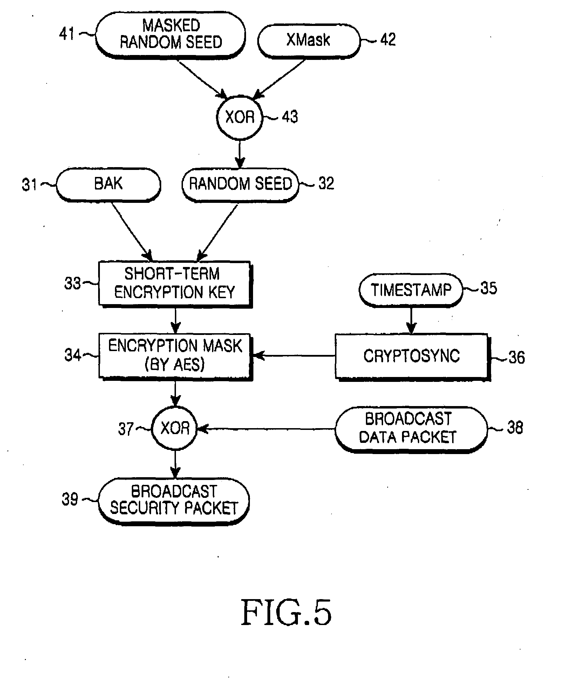

FIG 5 is a flow diagram illustrating an operation of generating broadcast security packets to which link layer encryption is applied according to an embodiment of the present invention. With reference to FIG 5, a description will now be made of a link layer encryption packet generation process and an encryption key generation process according to an embodiment of the present invention.

When a broadcast access key (BAK) 31, used for encryption/decryption of broadcast data is received from a BCMCS controller or a packet data service node, a link layer of an access node generates a seed 32. The "seed" refers to a bit sequence shared by a transmitter and a receiver of encrypted data, for communication security. Herein, the seed is called "random seed (RS)", it is randomly generated within a predetermined bit size. The access node generates a short-term encryption key (SK) 33 using the random seed 32 and the BAK 31.

Herein, an access node transmits a masked random seed 41 to an access terminal using a predetermined mask value (hereinafter referred to as "X mask value'') 42, instead of transmitting the existing random seed 32, and transmits the X mask value 42 with an X mask parameter message on a forward traffic channel rather than a control channel or a broadcast traffic channel. That is, the X mask value 42 is transmitted on an out-band basis. The X mask value 42 is a security parameter that is changed at periods of a relatively short time. The X mask parameter message is transmitted from an access node to an access terminal over a forward traffic channel rather than a control channel or a broadcast traffic channel, and can be received by a particular access terminal or all access terminals or particular access terminals receiving broadcasting service data in a cell.

At the time when it is desirable to generate a broadcast security packet, an access node generates crypto-synchronization information (Cryptosync) 36 using a timestamp value 35, and generates an encryption mask 34 by performing the known AES Rijndael algorithm using a short-term encryption key 33 and the crypto-synchronization information 36.

The access node generates a broadcast security packet 39 by performing an exclusive OR (XOR) operation 37 on the encryption mask 34 and a broadcast data packet 38 on a bitwise basis.

An access terminal acquires BAK for a broadcasting service by accessing a BCMCS controller in an initialization process, and also acquires a masked random seed from the access node at a start time of the broadcasting service or at a predetermined period. An X mask value for the masked random seed is carried on an X mask parameter message and then transmitted from the access node to the access terminal over a forward trade channel rather than a control channel or a broadcast traffic channel.

The access terminal acquires a random seed 32 from the masked random seed 41 using the X mask value 42, generates, by performing an XOR operation 43, a short-term encryption key using the acquired random seed 32 and the acquired BAK, and generates crypto-synchronization information using a timestamp value received from the access node at a predetermined time. Thereafter, the access terminal generates an encryption mask using the short-term encryption key and the crypto-synchronization information, and decrypts a broadcast security packet received from the access node using the generated encryption mask thereby acquiring a broadcast data packet. The X mask used in the embodiment of the present invention is identical to the general X mask, and any similar mask can replace the X mask.

An X mask value 42 for a broadcasting service is included in an X mask parameter message and then transmitted from an access node to an access terminal. The X mask parameter message is transmitted over a forward traffic channel rather than a control channel or a broadcast traffic channel. For example, when the X mask value 42 is changed, the access node transmits an X mask parameter message including a currently valid X mask value 42 to the access terminal at predetermined periods at the request of an access terminal.

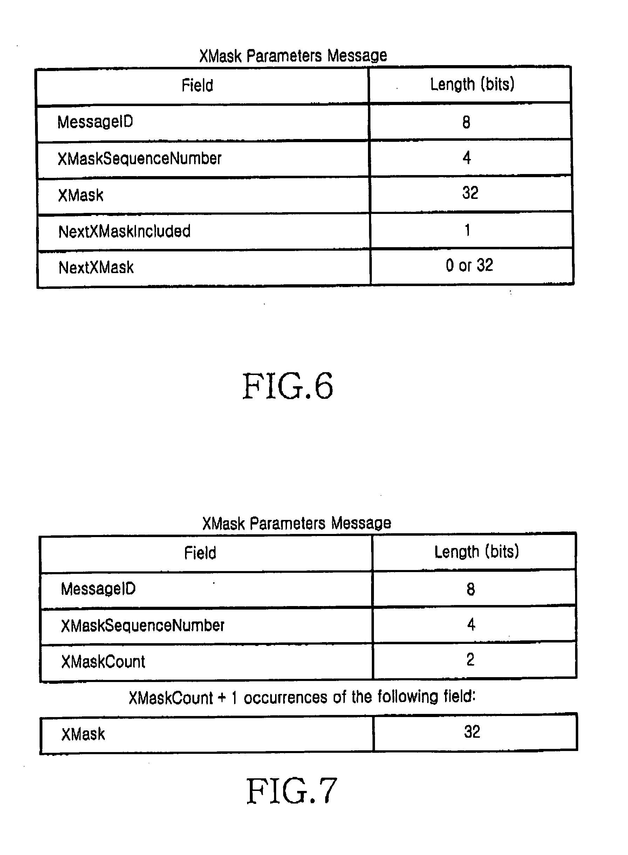

FIG 6 is a diagram illustrating an example of a format of an X mask parameter message according to an embodiment of the present invention. A detailed description will now be made of that example of a format of an X mask parameter message. Referring to FIG 6, the X mask parameter message is comprised of a Message ID field used for identifying a message type, an XMask Sequence Number field indicating a sequence number that increases by one each time an X mask is changed, and an XMask field including an X mask value. The XMask Sequence Number field guarantees an access terminal and an access node to use the same X mask value.

Further, the X mask parameter message includes a Next XMask Included field and a Next XMask field. The Next XMask Included field indicates whether a next X mask value is further included. For example, if this field value is set to '1', a next X mask value is included in the Next XMask field. In this case, a sequence number of the next X mask becomes the sequence number indicated by XMASK Sequence Number field + 1. A Reserved field is used for byte alignment. The X mask parameter message shown in FIG. 6 can be used when a corresponding cell uses a common X mask regardless of the type of an ongoing broadcasting service.

FIG 7 is a diagram illustrating another example of a format of an X mask parameter message according to an embodiment of the present invention. A description will now be made of that example of a format of an X mask parameter message. Referring to FIG 7, the X mask parameter message simultaneously carries a plurality of X mask values. In FIG. 7, a Message ID field is used for identifying a message type. An XMask Sequence Number field indicates a sequence number of a first included X mask value, and sequence numbers of next included X mask values are increased by one from the first sequence number. An XMask Count field indicates the number of X mask values included in this message. That is, the X mask parameter message includes as many X mask values in an XMask field as value indicated by XMask Count field + 1. If a value of the XMask Count field is '0', the X mask parameter message includes only one X mask value. Sequence numbers of the included X mask values are increased by one from the first sequence number. The X mask parameter message shown in FIG 7 can be used when a corresponding cell uses a common X mask regardless of the type of an ongoing broadcasting service.

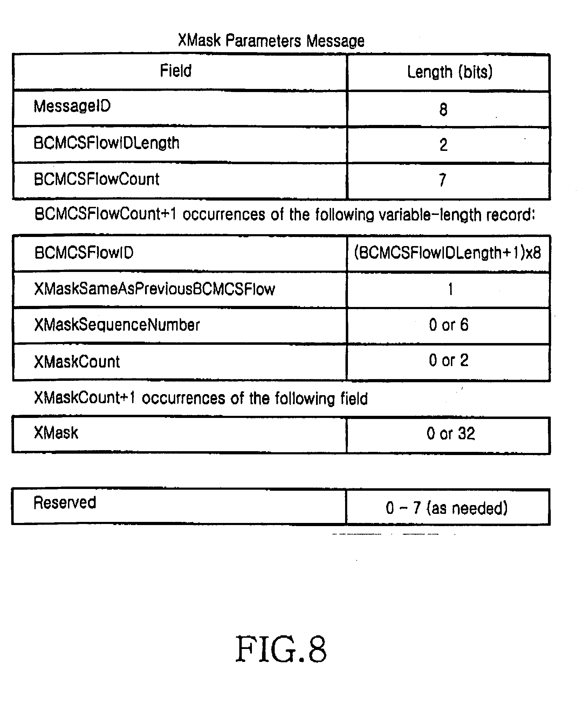

FIG 8 is a diagram illustrating a further example of a format of an X mask parameter message according to an embodiment of the present invention. A description will now be made of that example of a format of an X mask parameter message. Referring to FIG 8, the X mask parameter message is used when a different X mask is used for each broadcasting service. In FIG 8, a Message ID field is used for identifying a message type. A BCMCS Flow ID Length field is used for calculating a length of a BCMCS Flow ID field, and a length of the BCMCS Flow ID becomes (BCMCS Flow ID Length +1) x 8 bits. A BCMCS Flow Count field indicates the number of BCMCS Flow IDs included in the X mask parameter message, and a different X mask is transmitted for each BCMCS Flow ID. The BCMCS Flow ID field is used for identifying a broadcasting service. Therefore, information on an X mask used for each BCMCS Flow ID is transmitted together. An XMask Same As Previous BCMCS Flow field is used for indicating the case where the same X mask as an X mask applied to the BCMCS Flow ID field located in a previous field is used. When the same X mask is used although the BCMCS Flow ID is different, a duplicate X mask is not transmitted. Therefore, when the XMask Same As Previous BCMCS Flow field is set to '1', the X mask parameter message docs not include an XMask Sequence number field, an XMask Count field and an XMask field, for the BCMCS Flow ID field. The XMask Sequence Number field indicates a sequence number of a first included X mask value, and sequence numbers of next included X mask values are increased by one from the first sequence number. The XMask Count field indicates the number of X mask values included in this message. That is, the X mask parameter message includes as many X mask values as a value indicated by XMask Count field + 1. If a value of the XMask Count field is '0', the X mask parameter message includes only one X mask value.

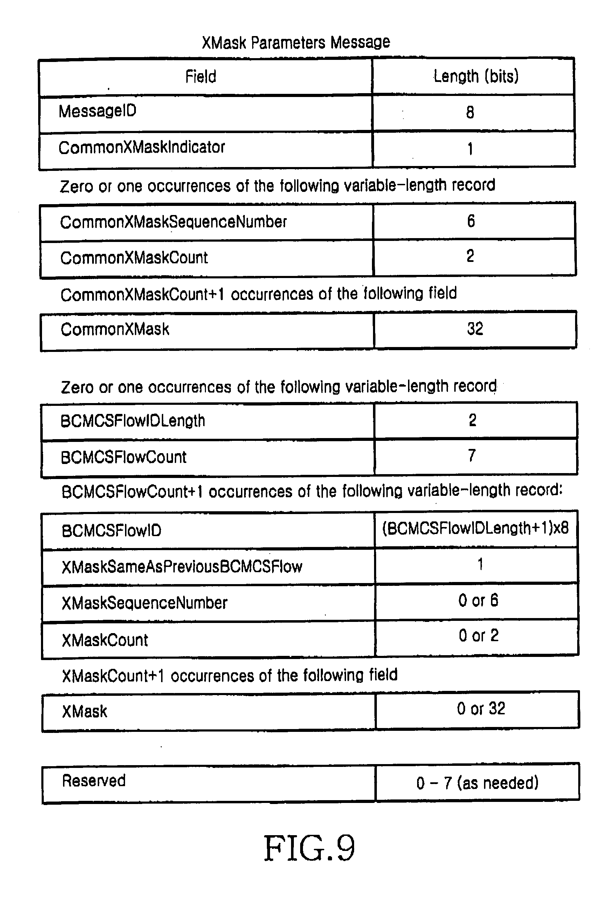

FIG 9 is a diagram illustrating still another example of a format of an X mask parameter message according to an embodiment of the present invention. A description will now be made of that example of a format of an X mask parameter message. Referring to FIG. 9, the X mask parameter message is used when a common X mask is used regardless of a broadcasting service or a different X mask is used for each broadcasting service. In FIG 9, a Message ID field is used for identifying a message type. A Common XMask Indicator field is an indicator indicating whether the message includes a common X mask regardless of a broadcasting service, or includes a different X mask for each broadcasting service. If the Common XMask Indicator field is set to '1', the message includes only a Common XMask Sequence Number field, a Common XMask Count field, a Common XMask field, and a Reserved field. In contrast, if the Common XMask Indicator field is set to '0', the message includes a BCMCS Flow ID Length field, a BCMCS Flow Count field, a BCMCS Flow ID field, an XMask Sequence Number field, an XMask Count field, an XMask field, and a Reserved field. The Common XMask Sequence Number field indicates a sequence number of a first included X mask value when a common X mask is used regardless of a broadcasting service. and sequence numbers of next included X mask values are increased by one from the first sequence number. The Common XMask Count field indicates the number of X mask values included in this message. That is, the X mask parameter message includes as many X mask values as a value indicated by Common XMask Count field + 1. If a value of the Common XMask Count field is '0', the X mask parameter message includes only one X mask value. Further, when a value of the Common XMask Count field is '0', the X mask parameter message includes a Common XMask field, and a common X mask is included in the Common XMask field. The BCMCS Flow ID Length field is used for calculating a length of a BCMCS Flow ID field, and a length of the BCMCS Flow ID becomes (BCMCS Flow ID Length +1) x 8 bits. A BCMCS Flow Count field indicates the number of BCMCS Flow IDs included in the X mask parameter message, and a different X mask is transmitted for each BCMCS Flow ID. The BCMCS Flow ID field is used for identifying a broadcasting service, and is transmitted together with information on an X mask used for each BCMCS Flow ID.

An XMask Same As Previous BCMCS Flow field is used for indicating the case where the same X mask, as an X mask applied to the BCMCS Flow ID field located in a previous field, is used. When the same X mask is used although the BCMCS Flow ID is different, a duplicate X mask is not transmitted. When the XMask Same As Previous BCMCS Flow field is set to '1', the X mask parameter message does not include an XMask Sequence number field, an XMask Count field and an XMask field, for the BCMCS Flow ID field. The XMask Sequence Number field indicates a sequence number of a first included X mask value, and sequence numbers of next included X mask values are increased by one from the first sequence number. The XMask Count field indicates the number of X mask values included in this message. That is, the X mask parameter message includes as many X mask values as a value indicated by XMask Count field + 1. If a value of the XMask Count field is '0'. the X mask parameter message includes only one X mask value. The Reserved field is used for byte alignment.

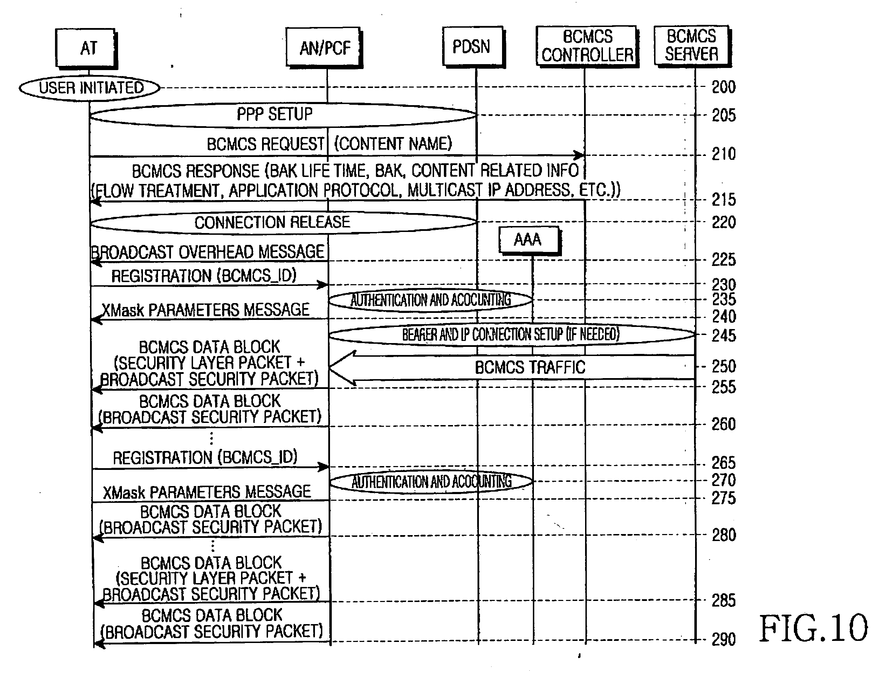

FIG. 10 is a message flow diagram illustrating a signaling procedure for a broadcasting service according to an embodiment of the present invention. In FIG 10, an access node (AN) and a packet control function block (PCF) are expressed as AN/PCF, for the convenience of explanation. Referring to FIG. 10, if a user requests initiation of a broadcasting service in step 200 by manipulating a menu screen or pushing a predetermined shortcut key, an access terminal (AT) sets up point-to-point protocol (PPP) connection to a packet data service node PDSN for packet data communication in step 205. Though not illustrated, the access terminal can receive information on broadcasting services that can be provided by a network, before step 200.

In step 210, the packet data service node forwards to a BCMCS controller a BCMCS Request message containing a content name indicating information on a broadcasting service the user desires to view. In step 215, the BCMCS controller transmits security information (BAK and BAK lifetime) necessary for receiving broadcast data together with requested broadcasting service-related information, e.g., protocol stack, multicast IP address and broadcast identifier, in response to the broadcasting service request. If the information related to the desired broadcasting service is completely acquired through such processes, the access terminal releases a radio channel and PPP connection in step 220.

In step 225, the access terminal receives a broadcast overhead message transmitted over a control channel. The broadcast overhead message includes information on a physical channel for receiving broadcast data, as well as sector information related to an access node or a sector, in case of a sector-type access node, serving the access node and information on its neighbor cell. In step 230, the access terminal transmits to the access node a registration message BCMCS FlowRegistration including an identifier BCMCS Flow ID or logical channel ID of a broadcasting service desired by the user. The registration message is commonly used for location registration in a cellular system, and herein, it is used for requesting a broadcasting service.

In step 235, the access node performs authentication to determine whether a user of the access terminal is a user authorized to use a corresponding broadcasting service, and transmits accounting information for the access terminal to an AAA server if the authentication is successful. Here, the processes of step 235 are optionally performed at the discretion of a service provider. That is, as occasion demands, one of the authentication process and the accounting process can be performed, or both of the two processes can be omitted. If it is assumed in step 235 that both the authentication and accounting processes are performed, the access node performs both the authentication and the accounting in step 235, and transmits an X mask parameter message including an X mask value to the access terminal in step 240 if the authentication was successful. The X mask parameter message is not always transmitted in response to the registration message, and transmission of the X mask parameter message can be omitted according to conditions of the access node.

In step 245, the access node determines whether the requested broadcasting service is identical to the ongoing broadcasting service. If it is determined that the requested broadcasting service is not identical to the ongoing broadcasting service or accounting is needed, the access node sets up a bearer path to the packet data service node and perform an IP connection procedure to the BCMCS server. Thereafter, in step 250, BCMCS traffic from the BCMCS server arrives up to the access node.

In step 255, the access node starts transmitting BCMCS packets for transmission of the BCMCS traffic. In this case, the access node transmits a security layer packet including a security parameter message, carried by a first BCMCS packet, and if there is enough room, the access node adds broadcast security packets. The security layer packet, as mentioned above, includes a masked random seed for decryption of broadcast security packets. Here, the security layer packet is used for signaling, and the broadcast security packets are for BCMCS traffic.

Thereafter, in step 260, the access node continuously transmits BCMCS packets including broadcast security packets. If a predetermined registration timer has expired or autonomous handoff has occurred, the access terminal transmits a registration message including an identifier of the current ongoing broadcasting service to the access node in step 265. In stop 270, the access node performs user authentication and updates accounting information for the access node in response to the registration message. Also, the process of step 270 is optionally performed. If user authentication was successful in step 270, the access node transmits an X mask parameter message including a currently valid X mask value to the access terminal in step 275, and continuously transmits BCMCS packets including broadcast security packets in step 280.

When the random seed is changed, the access node transmits a new random seed carried by a BCMCS packet in step 285, and continuously transmits consecutive broadcast security packets in step 290. The random seed transmitted in step 285 can be generated in any of the formats shown in FIGs. 6 to 9.

In the foregoing embodiment, an access node provides an X mask value after performing user authentication in response to a registration message from an access terminal. However, in a modified embodiment, the access node can omit the user authentication if needed. For example, in an initial registration process where a broadcasting service is initiated, the access node provides- an X mask value according to a result of user authentication by an AAA server and writes an authenticated access terminal in an authentication list. Thereafter, if a registration message is received from an access terminal, the access node determines whether the corresponding access terminal is identical to an access terminal written in the authentication list. It then provides an X mask value without user authentication if the corresponding access terminal is identical to an access terminal written in the authentication list, and performs user authentication through the AAA server only when the corresponding access terminal is not identical to an access terminal written in the authentication list,

In another embodiment, the access node spontaneously performs user authentication for an access terminal without receiving a registration message from the access terminal, thereafter, provides an X mask value according to the user authentication result, and writes or identifies an authenticated access terminal in an authentication list. Thereafter, in the same manner, the access node determines whether access nodes in broadcasting service are spontaneously written in the authentication list, and provides an X mask value according to the determination result.

In the present invention, a security parameter message includes a sequence number indicating a currently valid X mask value, as well as a random seed. The sequence number is used for distinguishing a currently valid X mask value, when an access terminal has a plurality of X mask values. Alternatively, the sequence number is also used for determining whether an invalid X mask value is used.

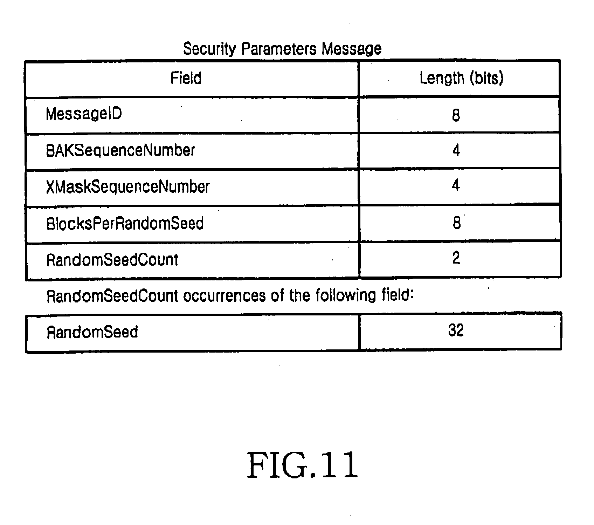

FIG. 11 is a diagram illustrating a format of a security parameter message according to an embodiment of the present invention, used when a plurality of different random seeds arc separately used for broadcasting services and the same X mask value is applied to the random seeds.

Referring to FIG 11, the security parameter message is comprised of a Message ID field used for identifying a message type, a BAK Sequence Number field used for identifying BAK used for decryption, an XMask Sequence Number field used for distinguishing a currently valid X mask value, a Blocks Per Random Seed field indicating the number of BCMCS packets that can be decrypted using one random seed, a Random Seed Count field indicating the number of random seeds included in this message, and at least one Random-Seed field included when a a value of the Random Seed Count field is not '0'. If a value of the Blocks Per Random Seed field is '2', an included random seed value is applied to two following BCMCS packets.

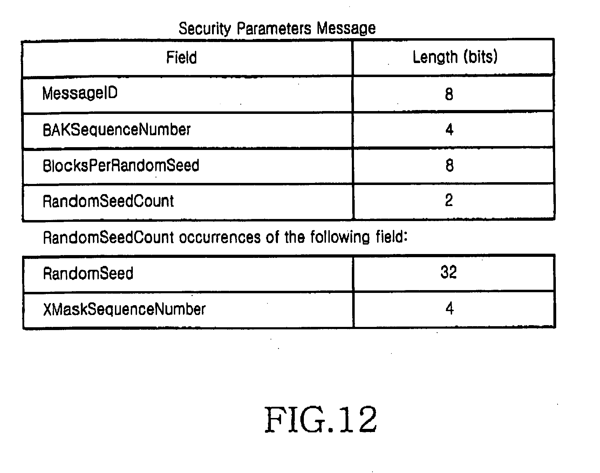

FIG. 12 is a diagram illustrating a format of a security parameter message according to another embodiment of the present invention, used when a plurality of different random seeds are separately used for broadcasting services and a unique X mask value is applied to each random seed. Referring to FIG 12, the security parameter message is comprised of a Message ID field used for identifying a message type, a BAK Sequence Number field used for identifying BAK used for decryption, a Blocks Per Random Seed field indicating the number of BCMCS packets that can be decrypted using one random seed, a Random Seed Count field indicating the number of random seeds included in this message, at least one Random Seed field included when a value of the Random Seed Count field is not '0', and an XMask Sequence Number field used for distinguishing a currently valid X mask value. If a value of the Blocks Per Random Seed field is '2', an included random seed value is applied to two following BCMCS packets.

In FIGs. 11 and 12, a random seed value included in the Random Seed field becomes a random seed masked by an X mask value, not a direct random seed. An access terminal stores X mask values received through an X mask parameter message and sequence values thereof, searches for an X mask value corresponding to a sequence value indicated by the XMask Sequence Number field, and masks a masked random seed included in the Random Seed field using the searched X mask value, thereby acquiring a random seed.

In the foregoing description, an access node generates an encryption key for a broadcasting service using a random seed, and provides an access terminal with a random seed masked with an X mask value. If the access node provides an intact random seed to the access terminal without using an X mask value, the access node includes information designating use/non-use of an X mask value in a broadcast overhead message.

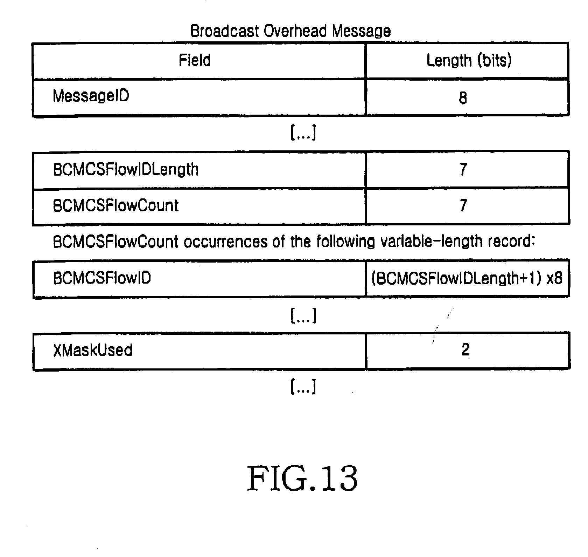

FIG. 13 is a diagram illustrating a format of a broadcast overhead message capable of designating use/non-use of an X mask value according to an embodiment of the present invention. Referring to FIG. 13, the broadcast overhead message includes a Message ID field used for identifying a message type, a BCMCS Flow ID Length field used for calculating a length of a BCMCS Flow ID field, a BCMCS Flow Count field indicating the number of valid broadcasting service channels, a BCMCS Flow ID field included according to a value of the BCMCS Flow Count field, and an XMask Used field indicating whether a masked random seed is provided or not. When the XMask Used field is set to '00', an access node transmits a non-masked random seed to an access terminal using a security parameter message. When the XMask Used field is set to '01', it means that a common X mask is used regardless of a broadcasting service. When the XMask Used field is set to '10', it means that a unique X mask is used for each broadcasting service. When the XMask Used field is set to '01' or '10', the access node transmits a masked random seed to the access terminal using a security parameter message, and transmits an X mask value for the masked random seed to the access terminal using an X mask parameter message.

However, if the access terminal does not have an X mask or has received a security parameter message having an X mask sequence number being different from information on an X mask stored therein, the access terminal cannot use the broadcasting service because it cannot decrypt the encrypted BCMCS packet. In this case, the access terminal transmits a logical channel registration message to the access node to request an X mask.

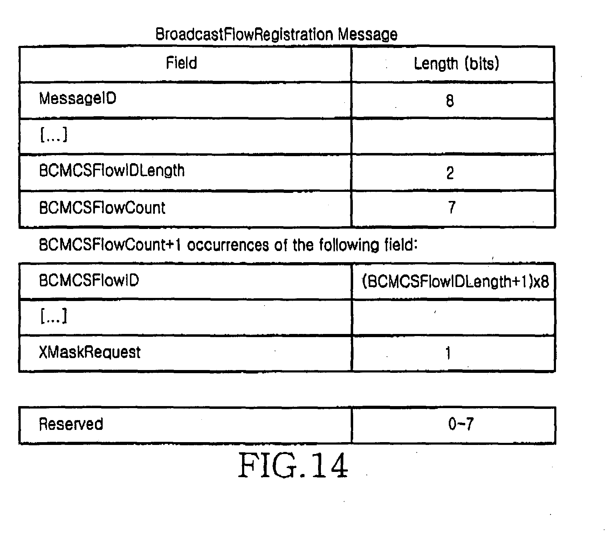

FIG 14 is a diagram illustrating a format of a logical channel registration message BCMCS FlowRegistration for requesting an X mask according to an embodiment of the present invention. The "logical channel registration message" refers to a registration message used for a broadcasting service. Actually, the logical channel registration message refers to a registration message used for noticing a location of an access terminal in a cellular system.

Referring to FIG 14, the logical channel registration message includes a Message ID field used for identifying a message type, a BCMCS Flow ID Length field used for calculating a length of a BCMCS Flow ID field, a BCMCS Flow Count field indicating the number of currently received broadcasting service IDs, or broadcast channel IDs, at least one BCMCS Flow ID field included according to a value of the BCMCS Flow field, and an XMask Request field indicating whether an X mask is requested by an access terminal. When the XMask Request field is set to '0', it means that an access terminal already uses a valid X mask value, and when the XMask Request field is set to '1', it means that the access terminal requests a valid X mask value from an access node because it has invalid X mask value.

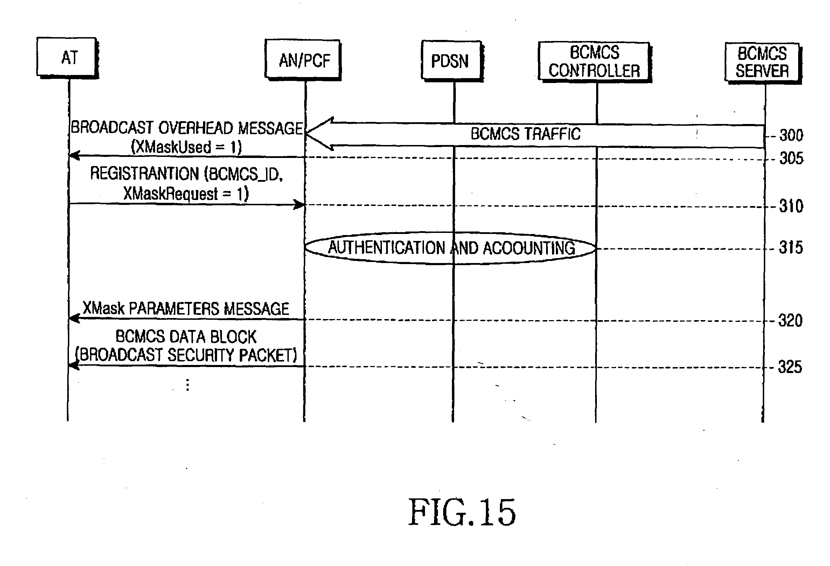

FIG. 15 is a message flow diagram illustrating a procedure for notifying an X mask value to an access terminal according to an embodiment of the present invention. Referring to FIG 15, in step 300, an access node receives BCMCS trade for a desired broadcasting service. In step 305, an access terminal receives a broadcast overhead message, and determines whether it already has an X mask for the desired broadcasting service if it is determined that the BCMCS traffic for the desired broadcasting service is encrypted with an X mask. That is, the access terminal determines whether an X mask corresponding to an X mask sequence number extracted from a security parameter message included in a BCMCS packet carrying the BCMCS traffic is already stored therein. If the corresponding X mask is already stored therein, the access terminal decrypts the BCMCS traffic using the X mask. Otherwise, the access terminal proceeds to step 310.

In step 310, the access terminal transmits a registration message with XMask Request=1 to the access node. In step 315, the access node performs an authentication procedure on an access terminal if needed, and updates accounting information. If the authentication is successful, the access node transmits in step 320 an X mask parameter message including a currently valid X mask value to the access terminal. In step 325, the access terminal decrypts a broadcast security packet received from the access node using the X mask parameter detected from the X mask parameter message.

In an example of FIG. 15, the access node updates an X mask spontaneously or periodically. However, the access node can also update an X mask at the request of the access terminal.

As is understood from the foregoing description, the present invention can perform accounting for a broadcasting service on a user using an X mask, or a security parameter, having a relatively short period, while minimizing an increase in additional overhead. When an access terminal docs not transmit a signaling message to be used for accounting to an access node, the present invention docs not provide the access terminal with an additional security parameter necessary for decryption of BCMCS traffic to compel the access terminal to perform broadcasting service registration, thereby securing efficient accounting.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for receiving an broadcasting service by an access terminal in a mobile communication system including an access node for providing a broadcasting service to the access terminal over a radio channel and a packet data service node for connecting the access node to a broadcasting server via a packet data network, the method comprising the steps of:
receiving a mask parameter message from the access node, the mask parameter message including a mask value for reception of a desired broadcasting service;
receiving a broadcasting service packet from the access node over a radio broadcast channel, the broadcasting service packet including a masked seed and a broadcast security packet;
calculating a particular seed using the masked seed value and the mask value;
generating an encryption key using the calculated seed and a previously received broadcast access key; and
decrypting the broadcast security packet using the encryption key,

2. The method of claim 1, wherein the mask parameter is received over a predetermined control channel.

3. The method of claim 1, wherein the mask parameter is received over a traffic channel uniquely assigned to a particular user.

4. The method of claim 1, wherein the step of calculating a particular seed further comprises the step of calculating the particular seed by performing an exclusive OR (XOR) operation on the received masked seed value and the received mask value.

5. The method of claim 1, wherein the encryption key is generated using a key obtained by combining the previously received broadcast access key with the particular seed and a timestamp value.

6. The method of claim 1, wherein the mask parameter message includes a mask field indicating the mask value, a sequence field indicating a sequence number corresponding to the mask value, an information field indicating whether a next mask value is included therein, and a next mask field indicating the next mask value, wherein the next mask field is included therein if a value of the information field and a sequence number of the next mask value is equal to a value determined by adding 1 to a value indicated by the sequence field.

7. The method of claim 1, wherein the mask parameter message includes a sequence field indicating a sequence number, a mask count field indicating the number of mask fields included therein, and at least one mask field sequentially including at least one mask value according to a value of the mask count field, wherein a sequence number indicated by the sequence field corresponds to a sequence number of a first mask value among the at least one mask value.

8. The method of claim 6, wherein the broadcasting service packet includes a sequence number corresponding to a mask value for the masked seed, the mask value being valid for a current period,.

9. The method of claim 7, wherein the broadcasting service packet includes a sequence number corresponding to a mask value for the masked seed, the mask value being valid for a current period,.

10. The method of claim 1, wherein the mask parameter message is received in response to a registration message transmitted to the access node to request a desired broadcasting service.

11. The method of claim 1, further comprising the steps of:
receiving a broadcasting service packet including a next broadcast security packet without a masked seed from the access node over the radio broadcast channel; and
decrypting the next broadcast security packet using the encryption key generated with the received mask value.

12. The method of claim 1, further comprising the steps of:
if a mask value necessary for decrypting the broadcast security packet is not normally received,
transmitting to the access node a registration message including a request field being set to a value for requesting a mask value; and
receiving a mask parameter message including a valid mask value in response to the registration message.

13. The method of claim 1, further comprising the step of receiving a broadcast overhead message from the access node, the broadcast overhead message including broadcasting service parameters and an information field indicating use/non-use of a mask value in an initialization procedure for the broadcasting service.

14. The method of claim 1, wherein the mask parameter message including a message identifier (ID) field for identifying a message type, a broadcasting service ID for identifying a broadcasting service, a field indicating a length of a broadcasting service ID field, a broadcasting service ID count field indicating the number of broadcasting service IDs, a same mask field for a previous broadcasting service ID using the same mask as a mask applied to a broadcast traffic identified by a previous broadcasting service ID, a mask sequence number field indicating a sequence number corresponding to the mask value, a mask count field, and mask information.

15. The method of claim 1, wherein the mask parameter message includes a message ID field for identifying a message type, a common mask indicator field, and same mask information for a previous broadcasting service, wherein if the same mask information for the previous broadcasting service is 1, the mask parameter message includes a common mask sequence number field, a common mask count field, and a common mask information field, wherein if the same mask information for the previous broadcasting service is 0, the mask parameter message includes a broadcasting service ID length field, a broadcasting service count field, a broadcasting service ID field, a mask sequence number field, and a mask count information field.

16. The method of claim 11, wherein the registration message includes a message ID field, a broadcasting service ID field, a field indicating a length of the broadcasting service ID field, a broadcasting service count field, and a mask request field indicting whether a mask is requested by an access terminal.

17. The method of claim 12, wherein the overhead message includes a message ID field, a broadcasting service ID field, a field indicting a length of the broadcasting service ID field, a broadcasting service count field, and a mask used field indicating whether a masked random seed is provided.

18. A method for providing an broadcasting service by an access node in a mobile communication system including the access node for providing a broadcasting service to an access terminal over a radio channel and a packet data service node for connecting the access node to a broadcasting server via a packet data network, the method comprising the steps of:
if a broadcasting service is requested by the access terminal,
receiving a broadcast access key (BAK) for the requested broadcasting service from the broadcasting server, and
transmitting the received broadcast access key to the access terminal;
transmitting a mask parameter message including a mask value for the requested broadcasting service to the access terminal;
generating a broadcast security packet by encrypting broadcast data requested by the access terminal using an encryption key generated with a seed for the broadcasting service and a timestamp value; and
masking the seed using the mask value, and transmitting a broadcasting service packet including the masked seed and the broadcast security packet to the access terminal over a radio broadcast channel.

19. The method of claim 18, wherein the step of masking the seed using the mask value comprises the step of performing an exclusive OR (XOR) operation on the seed and the mask value.

20. The method of claim 18, wherein the step of transmitting the mask parameter message further comprises the steps of:
performing user authentication on the access terminal; and
transmitting the mask parameter message including the mask value if the user authentication is successful.

21. The method of claim 18, wherein the mask parameter message includes a mask field indicating the mask value, a sequence field indicating a sequence number corresponding to the mask value, an information field indicating whether a next mask value is included therein, and a next mask field indicating a next mask value, wherein the next mask field is included in the mask parameter message if a value of the information field and a sequence number of the next mask value is equal to a value determined by adding 1 to a value indicated by the sequence field.

22. The method of claim 18, wherein the mask parameter message includes a sequence field indicating a sequence number, a mask count field indicating the number of mask fields included therein, and at least one mask field sequentially including at least one mask value according to a value of the mask count field, wherein a sequence number indicated by the sequence field corresponds to a sequence number of a first mask value among the at least one mask value.

23. The method of claim 21, wherein the broadcasting service packet includes a sequence number for the masked seed, the sequence number corresponding to a mask value valid for a current period.

24. The method of claim 22, wherein the broadcasting service packet includes a sequence number corresponding to a mask value for the masked seed, the sequence number being valid for a current period.

25. The method of claim 18, wherein the mask parameter message is transmitted in response to a registration message received from the access terminal to request a desired broadcasting service.

26. The method of claim 18, further comprising the step of transmitting a next broadcasting service packet including a next broadcast security packet after transmitting the broadcasting service packet-including the masked seed, the next broadcasting service packet not including the masked seed, wherein the next broadcast security packet is encrypted using the encryption key generated with the seed.

27. The method of claim 18, further comprising the step of receiving a registration message from the access terminal, the registration message including a request field being set to a value for requesting a mask value, and transmitting a mask parameter message including a valid mask value to the access terminal in response to the registration message.

28. The method of claim 18, further comprising the step of transmitting to the access terminal a broadcast overhead message including broadcasting service parameters and an information field indicating use/non-use of a mask value in an initialization procedure for the broadcasting service.

29. The method of claim 18, wherein the mask parameter message includes a message ID field for identifying a message type, a broadcasting service ID field for identifying a broadcasting service, a field indicating a length of a broadcasting service ID field, a broadcasting service ID count field indicating the number of broadcasting service IDs, a same mask field for a previous broadcasting service ID using the same mask as a mask applied to broadcast traffic identified by a previous broadcasting service ID, a mask sequence number field indicating a sequence number corresponding to the mask value, a mask count field, and a mask information field.

30. The method of claim 18, wherein the mask parameter message includes a message ID field for identifying a message type, a common mask indicator field, and same mask information for a previous broadcasting service, wherein if the same mask information for the previous broadcasting service is 1, the mask parameter message includes a common mask sequence number field, a common mask count field, and a common mask information field, wherein if the same mask information for the previous broadcasting service is 0, the mask parameter message includes a field indicating a length of a broadcasting service ID field, a broadcasting service count field, a broadcasting service ID field, a mask sequence number field, and a mask count information field.

31. The method of claim 22, wherein the registration message includes a message ID field, a broadcasting service ID field, a field indicating a length of the broadcasting service ID field, a broadcasting service count field, and a mask request field indicting whether a mask is requested by an access terminal.

32. The method of claim 28, wherein the overhead message includes a message ID field, a broadcasting service ID field, a field indicting a length of the broadcasting service ID field, a broadcasting service count field, and a mask used field indicating whether a masked random seed is provided.
